# EUROPEAN PATENT SPECIFICATION

(11) **EP 0 912 614 B1**
(45) Date of publication and mention of the grant of the patent: **29.05.2002**
(21) Application number: 97930385.6
(22) Date of filing: 24.06.1997
(51) Int. Cl.: C08B 37/06, A23L 1/48

(54) **PECTINACEOUS GELLING AGENT**
PEKTIN GELIERMITTEL
AGENT GELIFIANT A BASE DE PECTINE

(30) Priority: 24.06.1996 EP 96110139; 03.06.1997 US 48396 P
(43) Date of publication of application: 06.05.1999
(73) Proprietor: SOCIETE DES PRODUITS NESTLE S.A., 1800 Vevey (CH)
(72) Inventor: TURQUOIS, Tristan, CH-1066 Epalinges (CH); BEST, Eric, Dublin, OH 43017 (US); VANACKER, Pascal, ST-JOSEPH, MO 64506 (US); SAINT CLAIR, Guillaume, F-78000 Versailles (FR); RINAUDO, Marguerite, F-38000 Grenoble (FR); TARAVEL, François-René, F-38113 Veurey-Voroize (FR); HEYRAULD, Alain, F-38113 VEUREY-VOROIZE (FR)
(86) International application number: EP9703290
(87) International publication number: WO9749734

(56) References cited:
- EP-A- 0 426 434
- GB-A- 555 842
- US-A- 2 626 706
- US-A- 5 071 970
- CHEMICAL ABSTRACTS, vol. 76, no. 9, 28 February 1972 Columbus, Ohio, US; abstract no. 44907, "Food emulsions" XP002043690 & SU 303 819 A (INSTITUTE OF HETEROORGANIC COMPOUNDS) 1 October 1971
- CHEMICAL ABSTRACTS, vol. 72, no. 12, 23 March 1970 Columbus, Ohio, US; abstract no. 56953, "Pectin substances in sugar beets and their changes under various extraction conditions" XP002043691 & PETROV S.: TEHNICA, vol. 24, no. 10, 1969, BELGRADE, pages 1667-1671,

## Description

### Field of the Invention

This invention relates to a pectinaceous gelling agent which has good gelling properties, to a process for its production, and to foodstuffs containing it.

### Background to the Invention

Pectins are commonly used as gelling agents in foodstuffs. Gels are tridimensional networks formed by the gelling agent and that contain a liquid phase. Pectin gels are formed by hydrated pectins, after physical or chemical changes that decrease the solubility of the pectins. Pectins are found in nature in the middle lamella and primary cell walls of plant tissue. They are primarily straight-chained polymers of D-galacturonic acid in which the D-galacturonic acid units are linked by 1→4 glycosidic linkages. Neutral sugars such as galactose, glucose, rhamnose, arabinose and xylose may also be present; usually in the range of 5 to 10% by weight of the galacturonic acid. The rhamnose is often in the polymer as an interruption of the polygalacturonate sequences. The other sugars are usually found as side chains or as contaminating polysaccharides.

The functional group at the sixth carbon of each galacturonic acid unit may exist as a methyl ester or as a free carbonyl group. Two types of pectins are commonly distinguished on the basis of the extent of esterification of this functional group. One type is low methoxy pectins which have a degree of esterification (DE) of less than 50%; that is less than 50% of the total number of functional groups exist in the methyl ester form. The other type is high methoxy pectins which have a degree of esterification (DE) of greater than 50%. High methoxy pectins form gels in an acidic environment and in the presence of sucrose. Low methoxy pectins form gels in the presence of alkaline earth metals; especially calcium. In the gels, the galacturonic acid units making up the polymer chain are cross-linked by divalent calcium ions. However, in both cases, gelation and the properties of the gel however depend upon many factors including pH, temperature, the degree of esterification, molecular weight, sugar content, calcium content and pectin content.

The main sources of commercial pectin products are citrus peels and apple pomace. Lemon and orange peels are one of the riches sources. However, many vegetable materials which form wastes and by products contain pectin. Therefore there has been some interest in using these vegetable materials as commercial sources of pectin. For example, Sosulski, F *et al;* 1980; Przemysl Fermentacyjny i Owocowo-Warzywny, 24(3), 19-21 describe a process for the purification of pectin from sunflower stalks and flowers. Also, sugar beet pulp has been identified as a possible source of pectin since it contains about 20% by weight of pectin and is widely available. Unfortunately, the pectins in sugar beet pulp have a high degree of esterification and, to date, have shown to have poor gelling properties. Some attempts have been made to improve the gelling properties of pectins obtained from sugar beet but these have all involved structurally modifying the pectins. This results in complicated processing and a product which is too expensive for commercial application.

Accordingly there is a need for pectinaceous gelling agents which have low degrees of esterification and which may be obtained from vegetable matter having a high degree of esterification.

### Summary of the invention

Accordingly, in one aspect, this invention provides a pectinaceous gelling agent obtained from vegetable matter containing pectinaceous substances that have a degree of esterification of greater than about 50%, the gelling agent comprising about 30% to about 55% by weight of galacturonic acid and having a degree of esterification of about 5% to about 20%.

Surprisingly, it has been found that excellent gelling agents may be prepared from vegetable matter containing pectinaceous substances that have a degree of esterification of greater than about 50% by keeping the galacturonic acid content to below about 55% by weight. Traditionally, efforts have been directed to obtaining extremely pure pectin products; for example with galacturonic acid contents above 80% by weight. Further the gelling agents of the invention contain pectinaceous substances having very low degrees of esterification; often less than a third of the degree of esterification of the pectinaceous substances in the vegetable matter itself.

The vegetable matter may be sugar beet pulp. The pectin content of sugar beet pulp is about 20% by weight on a dry basis and the degree of esterification is about 53%. Preferably, when the vegetable matter is sugar beet pulp, the gelling agent contains about 40% to about 50% by weight of galacturonic acid and has a degree of esterification of about 6% to about 15%. Consequently gels produced using the gelling agents have excellent properties.

In another aspect, this invention provides a process for the production of a pectinaceous gelling agent from vegetable matter that contains pectinaceous substances having a degree of esterification of greater than about 50%, the process comprising:
subjecting comminuted vegetable matter to an alkaline extraction at a temperature of about 15 to about 50°C for providing a pectinaceous extract;
separating the extract from the vegetable matter; and
neutralizing the extract to provide a pectinaceous gelling agent containing about 30% to about 55% by weight of galacturonic acid and having a degree of esterification of about 5% to about 20%.

The alkaline extraction may be carried out by suspending the comminuted vegetable matter in an aqueous alkaline solution at a pH of about 8 to about 12.

The extract is preferably neutralized by suspending it in an aqueous solution at a pH of about 6 to about 7.5. Alcohol may then be added to the suspension for precipitating the pectinaceous gelling agent. The suspension may be a water suspension. The alcohol is preferably ethanol and the suspension preferably contains about 50% by weight of ethanol.

The invention also provides the gelling agent obtainable by the process defined above.

In another aspect, this invention provides a gelled emulsion product containing protein, lipid, carbohydrate and a binder, the binder comprising a gelling agent as defined above. Preferably the gelled emulsion product is a pet food.

### Detailed description of the preferred embodiments

This invention provides a gelling agent which contains pectin. The gelling agent may be produced from waste vegetable matter which contains pectinaceous substances having a degree of esterification of greater than 50%. Any suitable vegetable matter which is a source of high methoxy pectins may be used; for example the sugar beet pulp, tomato, and pumpkin.

The vegetable matter is preferably comminuted prior to processing; for example by subjecting it to grinding or shredding. The comminuted vegetable matter may then be dried. To inactivate enzymes, the vegetable matter is preferably subjected to heat treatment. This may be accomplished by washing in hot water; for example at a temperature of about 70°C to about 90°C and for a time of about 10 to 30 minutes. Washing has the additional advantage of removing by-products.

The washed vegetable matter is then subjected to extraction under alkaline conditions. Extraction may be carried out in any suitable manner. For example, the vegetable matter may be suspended in the appropriate solution in a stirred tank reactor. Alternatively, the extraction solution may be caused to flow through a fixed bed of the vegetable matter. Continuous extraction techniques may also be used.

The extraction solution is an aqueous alkaline solution at a pH of about 8 to 12. The temperature is held at about 15 to 50°C; for example at room temperature. Any suitable alkaline may be used; especially alkaline metal hydroxides and carbonates or alkaline-earth metal hydroxides and carbonates. For example, the alkaline may be sodium hydroxide. Suitable NaOH strengths are 0.02 to 0.2 M; for example 0.05 M NaOH which is at a pH of about 12.

The extraction time needed depends upon the mode of extraction. However extraction times of about 5 minutes to about 180 minutes may be used.

The extract is then separated off from the residual solid matter. This may be carried out by any suitable solid-liquid separation technique. Centrifugation is preferred. Pectinaceous matter is then caused to precipitate from the extract. This may be accomplished by adding an acid to the extract to lower the pH to a neutral pH of about 6.0 to about 7.5 and then adding a suitable alcohol. The precipitation is conveniently carried out at room temperature. Ethanol is a suitable alcohol. Typically, sufficient ethanol is added such that ethanol makes up at least about 50% by weight of the solution. If desired, sodium chloride may be added to the solution prior to the addition of the ethanol. Any suitable acid may be used for the neutralization; for example HCl.

The precipitate is then separated from the liquid. Again any suitable solid-liquid separation technique may be used. Centrifugation is preferred.

The precipitate may then be recovered, washed and dried to provide the gelling agent. Washing is preferably carried out with ethanol; for example in three stages using successively increasing concentrations. Concentrations of 70%, 80% and 95% are suitable. The drying may be carried out under vacuum at room temperature.

The gelling agent obtained comprises about 30% to about 55% by weight of galacturonic acid; which is a relatively low concentration since most pectin-based gelling agents contain above 68% by weight of galacturonic acid. However the pectinaceous substances in the gelling agent have a degree of esterification of about 5% to about 20% which provides the gelling agent with excellent gelling properties. Further the gelling agent is safe to use in food stuffs and hence may be used as a gelling agent for food stuffs. Suitable food stuffs include pet foods, gelled meat products, jellies, jams, and gelled dairy products. The gelling agent may also be used as a thickener or stabilizer in ice creams, juices and beverages.

However, due to the excellent gelling properties of the gelling agent, it is most suitably used in products which undergo retorting and sterilization; especially in the pet food industry. Examples of suitable products include gelled emulsion products such as gelled loaf products and gelled chunk-type products.

The gelled emulsion products typically contain protein, lipid, carbohydrate and a binder. The protein may be provided in the form of a meat material, animal or dairy proteins, and vegetable proteins, or mixtures of these proteins. Any suitable type of meat material may be used, for example, muscular or skeletal meat, meat by-products such as heart, liver, kidney, lung, or a mixture of meat and meat by-products. Further, the material may be obtained from any suitable source such as from livestock, poultry, and fish. Also, the meat material may be in the form of meat meals such as poultry meal, fish meal, red meat meal and mixtures thereof. Suitable animal or dairy proteins which may be used include egg proteins, gelatin, blood, and whey, or mixtures of these proteins. Suitable vegetable proteins which may be used include wheat gluten, soy flour, soy protein concentrates, soy protein isolates, pea protein isolates, etc, or mixtures of these proteins. The exact choice of protein used will depend upon factors such as availability, cost and palatability. Typically, the protein suitably comprises about 5 % to about 15% by weight of the gelled emulsion product.

The lipid may be provided in the form of suitable animal or vegetable fats and oils, or both. If the protein is provided in the form of a meat material, the meat material may well provide the desired amount of lipids and hence addition of further lipid may not be necessary. If it is necessary to add lipids, suitable examples of animal fats are tallow, chicken fats, pork fats, beef fats, and the like. Suitable examples of vegetable fats and oils are hydrogenated palm oil, corn oil, sunflower oil, rapeseed oil, and the like. Typically the emulsion product contains a maximum lipid level of about 25% by weight. Conveniently, the amount of lipid in the emulsion is in the range of about 2% to 15% by weight; more preferably about 5% to about 12% by weight.

If it is necessary to add carbohydrate, the carbohydrate is preferably provided in the form of a starch or flour. Suitable carbohydrate sources are wheat starch, potato starch, corn starch, wheat flour, corn flour, oat flour, rye flour, rice flour, and the like. Sugars may also be added. Typically, for chunk products, the carbohydrate, in the form of starch or flour, comprises about 3% to about 15% by weight of the gelled emulsion product.

Additional ingredients such as salts, spices, seasonings, flavoring agents, minerals, and the like may also be included in the emulsion product. The amount of additional ingredients used is preferably such that they make up about 0.5% to about 5% by weight of the emulsion product.

The emulsion product may be prepared by emulsifying the protein, carbohydrates and lipids to provide a primary emulsion. The additional ingredients such as salts, spices, seasonings, flavoring agents, minerals, and the like may be added at this time. Water may also be included in the primary emulsion to provide from about 50% to about 90% by weight of the primary emulsion. If sufficient moisture is present in the protein, especially if the protein is provided as a meat material, watet need not be added. A high speed emulsifier or homogeniser is particularly suitable for preparing the primary emulsion.

The gelling agent is then added to the primary emulsion; preferably in solution. Usually between about 0.5 % and about 5% by weight of the gelling agent is suitable. If necessary a calcium source is also added; for example calcium carbonate or calcium sulfate. Preferably calcium is present in an amount of about 40 to about 150 mg/g of gelling agent used. The primary emulsion is then subjected to further mixing or emulsification. The primary emulsion is then heated to a temperature above about 65°C; for example in a mixer-cooker. Steam may be injected into the primary emulsion if desired.

If it is desired to produce chunks, the heated emulsion may then be extruded, cooled and cut into chunks. The chunks may then be mixed with a suitable gravy or jelly and filled into cans or other containers. However, if it desired to produce a loaf type product, the heated emulsion may be filled directly into cans or other containers. The cans or other containers are then sealed and sterilized. Sterilization usually takes place at a temperature above about 120°C and for a period of at least about 15 minutes.

The gelled emulsion product obtained undergoes much less cook out of fats and starches giving a product with an excellent appearance. Further, the gelled emulsion product has a firm, relatively elastic texture.

Specific examples are now described for further illustration.

### Example 1 - Extraction from Sugar Beet Pulp

Sugar beet pulp having a dry matter content of 20% to 30% by weight is used. The sugar beet pulp is dried in an oven at 45°C and then ground to a size of 0.5 mm to 60 mesh. An amount of 500 g of the ground pulp is dispersed in 12.5 l of water at 85°C for 20 minutes. The water is removed using a centrifuge and the solid matter is suspended in 10 l of a 50 mM NaOH solution. The pH is 12. The solution stirred for 2 hours at room temperature. The extract is then recovered using a centrifuge.

The pH of the extract is adjusted to about 6.5 to 7.0 using 6 N HCl. An amount of 100 g of NaCl is added and 10 l of 95% ethanol is added. The mixture is stirred for 10 minutes and then stored overnight at 4°C. The precipitate which forms is recovered by centrifuging at 5000 rpm for 15 minutes. The precipitate is then washed three times; once with 70%,ethanol, once with 80% ethanol and once with 95% ethanol. The washed precipitate is dried in a vacuum oven at room temperature to provide a gelling agent.

### Example 2 - Characterization of the gelling agent

Samples of the gelling agent of example are subjected to the following analysis:
- the Weibull-Stoldt method to determine fat content.
- the Kjeldahl method to determine protein content.
- hydrolysis of a 50 mg sample in 12N H₂SO₄ for 60 minutes at 30 °C and then in 0.4N H₂SO₄ for 75 minutes at 130°C. Monosaccharides are then determined using high performance anion exchange chromatography and pulsed amperometric detection.
- decarboxylation and measurement of the carbon dioxide produced to determine the galacturonic acid content.
- saponification and measurement by gas chromatography of the methanol release to determine the degree of methoxylation.
- drying in an oven for 4 hours at 104°C and the moisture content measured;
- roasting at 550°C for 12 hours and ash content then measured. The fat and protein contents of each gelling agent are determined from further samples using the Weibull-Stoldt and Kjeldahl methods respectively.

The results are as follows:

| Characteristic | Raw material | Example 1 |
|---|---|---|
| Moisture (%) | 2.5 | 14.0 |
| Extraction Yield (% on basis of dried pulp or residue) | | 10.0 |
| Galacturonic acid (%) | 20.1 | 46.5 |
| Degree of esterification (%) | 52.8 | 8.9 |
| Rhamnose (%) | 1.4 | 0.7 |
| Arabinose (%) | 18.4 | 9.6 |
| Galactose (%) | 4.2 | 3.1 |
| Glucose (%) | 19.2 | 1.3 |
| Ashes (%) | 13.3 | 16.2 |
| Fat (%) | 0.9 | 0.8 |
| Protein (%) | 8.2 | 6.0 |

### Example 3 - Gel preparation and rheological measurements

A sample of the gelling agent of example 1 is dispersed in water to provide a concentration of about 2% by weight of gelling agent. The pH of the solution is 7.4. In each case, the suspension is stirred at a temperature of 25°C for about 2 hours. A selected amount of a solution containing 2.9 % by weight of CaSO₄.2H₂O is then added to obtain a desired calcium concentration. The solution is then stirred for about 1 minute, poured into a mold, and stored at 4°C for 24 hours. The gelled product is then removed and subjected to analysis.

The process is repeated except with the following changes:
- the gelling agent is dissolved in the presence of increasing concentrations of a citrate buffer;
- the gelling agent is hydrated at pH's in the range of about 4.2 to about 7.4 in the presence of sodium citrate buffer;
- the concentration of calcium is varied between 40 and 100 mg/g of gelling agent; and
- the temperature at which the gelling agent is hydrated is varied.

In each case, the elastic modulus E, which is a measure of gel firmness, is determined for each gelled product using a Micro System TA-XT2 Texture Analyzer. The strain applied during the measurement is 10% and the plate speed is 0.8 mm/s. Certain of the results are as follows:

| Hydration Temp. (°C) | Hydration pH | Calcium or Ca²⁺ Concentration (mg/g) | Elastic Modulus (Pa) |
|---|---|---|---|
| 25 | 7.4 | 40 | 98000 |
| 25 | 4.5 | 40 | 38000 |
| 25 | 6.4 | 40 | 22000 |
| 25 | 6.4 | 60 | 26000 |
| 25 | 6.4 | 80 | 27500 |
| 25 | 6.4 | 100 | 26000 |
| 20 | 6.4 | 40 | 22500 |
| 40 | 6.4 | 40 | 15000 |
| 60 | 6.4 | 40 | 13000 |

The results indicate that increasing the presence of sodium citrate decreases the elastic modulus of the gelled products. Further, the results indicate that increasing the amount of calcium present in general increases the elastic modulus of all gelled products. Also, the elastic modulus decreases with increasing hydration temperature leading to an optimum hydration temperature of about room temperature (about 20°C to about 30°C). The optimum hydration pH is about 4.5 to about 6.5.

These results indicate that the gel firmness may be readily adjusted by varying parameters such as calcium content, pH, hydration temperature, sodium citrate presence, etc, to achieve a desired level.

### Example 4 - Production of a pet food

Frozen beef is comminuted and emulsified with beef fat in a homogenizer. Carbohydrate, in the form of wheat starch, and salt are added and the mixture mixed at low speed. Water containing CaSO₄.2H₂O is added and the mixture emulsified at high speed.

A sample of a gelling agent of example 1 and calcium sulfate is added to the mixture. The mixture is heated treated at 78°C for 30 minutes and then allowed to cool to form gelled emulsion products. The gelled emulsion products are cut into chunks and filled into cans with water. The cans are sealed and sterilized at 121°C for 20 minutes. The cans are then allowed to cool.

The cans are opened and the contents visually inspected. The chunks are well-formed and little or no cook out of fat or starch is noticeable. Further the chunks retain their shape and have a firm texture.

### Example 5 - Production of a pet food loaf

Frozen liver, lungs, and kidneys are comminuted and mixed at low speed with water and salts, including CaSO₄.2H₂O. The mixture is then emulsified at high speed and heated to 35°C. A gelling agent of example 1 is added to water and hydrated at 30°C for 15 minutes at a pH of 6. The gelling agent solution is then added to a separate emulsion. The mixtures are then filled into cans, the cans are sealed and retorted at 121°C for 20 minutes. The cans are opened and the contents visually inspected. The meat matrix is gellified, retains its shape and has a firm texture.

## Claims

1. A pectinaceous gelling agent obtainable from vegetable matter containing pectinaceous substances having a degree of esterification of greater than 50%, **characterised in that** the gelling agent comprises from 30% to 55% by weight of galacturonic acid and having a degree of esterification of 5% to 20%.

2. A gelling agent according to claim 1 in which the vegetable matter is sugar beet pulp and the gelling agent contains 40% to 50% by weight of galacturonic acid and has a degree of esterification of 5% to 15%.

3. A gelled emulsion product containing protein, lipid, carbohydrate and a binder, the binder comprising a gelling agent according to claim 1.

4. A gelled emulsion product according to claim 3 further comprising a source of calcium.

5. A gelled emulsion product according to claim 3 which contains 0.5% to 5% by weight of the gelling agent.

6. A process for the production of a pectinaceous gelling agent from vegetable matter containing pectinaceous substances having a degree of esterification of greater than 50%, the process comprising:
subjecting comminuted vegetable matter to an alkaline extraction at a temperature of 15°C to 50°C for providing a pectinaceous extract;
separating the extract from the vegetable matter; and
neutralizing the extract to provide a pectinaceous gelling agent containing 30% to 55% by weight of galacturonic acid and having a degree of esterification of 5% to 20%.

7. A process according to claim 6 in which the comminuted vegetable matter is extracted by suspending it in an aqueous alkaline solution for a time of 5 minutes to 180 minutes.

8. A process according to claim 6 in which the extract is neutralized in a suspension at a pH of 6 to 7.5 and alcohol is added to the suspension for precipitating the pectinaceous gelling agent.

9. A pectinaceous gelling agent obtained from vegetable matter containing pectinaceous substances having a degree of esterification of greater than 50%, the gelling agent comprising 30% to 55% by weight of galacturonic acid and having a degree of esterification of 5% to 20% and obtainable by a process comprising:
subjecting comminuted vegetable matter to an alkaline extraction at a temperature of 15°C to 50°C for providing a pectinaceous extract;
separating the extract from the vegetable matter; and
neutralizing the extract to provide the pectinaceous gelling agent.

## Patentansprüche

1. Pektin-artiges Geliermittel, erhältlich aus Gemüsematerial mit Pektin-artigen Substanzen mit einem Veresterungsgrad von über 50 %, **dadurch gekennzeichnet, dass** das Geliermittel von 30 bis 55 Gewichtsprozent Galacturonsäure und einen Veresterungsgrad von 5 bis 20 % aufweist.

2. Geliermittel nach Anspruch 1, bei dem das Gemüsematerial Zuckerrüben-Pulpe ist, und wobei das Geliermittel 40 bis 50 Gewichtsprozent Galacturonsäure und einen Veresterungsgrad von 5 bis 15 % aufweist.

3. Geliertes Emulsionsprodukt mit Protein, Fett, Kohlenhydrat und einem Bindemittel, wobei das Bindemittel ein Geliermittel nach Anspruch 1 umfasst.

4. Geliertes Emulsionsprodukt nach Anspruch 3, das weiter eine Calciumquelle enthält.

5. Geliertes Emulsionsprodukt nach Anspruch 3, das 0,5 bis 5 Gewichtsprozent des Geliermittels enthält.

6. Verfahren zur Herstellung eines Pektin-artigen Geliermittels aus Gemüsematerial mit Pektin-artigen Substanzen mit einem Veresterungsgrad von über 50 %, welches umfasst:
Unterwerfen von zerkleinertem Gemüsematerial einer alkalischen Extraktion bei einer Temperatur von 15° bis 50 °C, um einen Pektin-artigen Extrakt bereitzustellen,
Abtrennen des Extrakts von dem Gemüsematerial, und
Neutralisieren des Extrakts, um ein Pektin-artiges Geliermittel mit 30 bis 55 Gewichtsprozent Galacturonsäure und einem Veresterungsgrad von 5 bis 20% bereitzustellen.

7. Verfahren nach Anspruch 6, bei dem das zerkleinerte Gemüsematerial durch Suspendieren in einer wässrigen alkalischen Lösung für eine Zeitspanne von 5 bis 180 Minuten extrahiert wird.

8. Verfahren nach Anspruch 6, bei dem der Extrakt in einer Suspension bei einer pH von 6 bis 7,5 ist neutralisiert und Alkohol den Pektin-artiges Geliermittel zu ausfallen wird hinzufügen.

9. Pektin-artiges Geliermittel, erhältlich aus Gemüsemittel mit Pektin-artigen Substanzen mit einem Veresterungsgrad von über 50%, **dadurch gekennzeichnet, dass** das Geliermittel von 30 bis 55 Gewichtsprozent Galacturonsäure und einen Veresterungsgrad von 5 bis 20% aufweist und erreichbar durch einen Verfahren welches umfässt:
Unterwerfen von zerkleinertem Gemüsematerial einer alkalischen Extraktion bei einer Temperatur von 15° bis 50°C, um einen Pektin-artigen Extrakt bereitzustellen,
Abtrennen des Extrakts von dem Gemüsematerial, und
Neutralisieren des Extrakts, um den Pektin-artiges Geliermittel bereitzustellen.

## Revendications

1. Agent gélifiant à base de pectine pouvant être obtenu à partir d'une matière végétale contenant des substances du type de la pectine ayant un degré d'estérification supérieur à 50 %, ledit agent gélifiant étant **caractérisé en ce qu'**il comprend de 30 % à 55 % en poids d'acide galacturonique et il a un degré d'estérification de 5 % à 20 %.

2. Agent gélifiant suivant la revendication 1, dans lequel la matière végétale consiste en pulpe de betterave à sucre et l'agent gélifiant contient 40 % à 50 % en poids d'acide galacturonique et a un degré d'estérification de 5 % à 15 %.

3. Produit en émulsion gélifié contenant une protéine, un lipide, un glucide et un liant, le liant comprenant un agent gélifiant suivant la revendication 1.

4. Produit en émulsion gélifié suivant la revendication 3, comprenant en outre une source de calcium.

5. Produit en émulsion gélifié suivant la revendication 3, qui contient 0,5 % à 5 % en poids de l'agent gélifiant.

6. Procédé pour la production d'un agent gélifiant à base de pectine à partir d'une matière végétale contenant des substances du type de la pectine ayant un degré d'estérification supérieur à 50 %, procédé comprenant les étapes consistant :
à soumettre la matière végétale réduite en particules fines à une extraction alcaline à une température comprise dans l'intervalle de 15 °C à 50 °C pour produire un extrait à base de pectine ;
à séparer l'extrait de la matière végétale ; et
à neutraliser l'extrait pour produire un agent gélifiant à base de pectine contenant 30 % à 55 % en poids d'acide galacturonique et ayant un degré d'estérification de 5 % à 20 %.

7. Procédé suivant la revendication 6, dans lequel la matière végétale réduite en particules fines est soumise à une extraction en la mettant en suspension dans une solution alcaline aqueuse pendant un temps de 5 minutes à 180 minutes.

8. Procédé suivent la revendication 6, dans lequel l'extrait est neutralisé dans une suspension à pH de 6 à 7,5 et de l'alcool est ajouté à la suspension pour précipiter l'agent gélifiant à base de pectine.

9. Agent gélifiant à base de pectine obtenu à partir d'une matière végétale contenant des substances du type de la pectine ayant un degré d'estérification supérieur à 50 %, l' agent gélifiant comprenant 3 % à 55 % en poids d'acide galacturonique et ayant un degré d'estérification de 5 % à 20 % et pouvant être obtenu par un procédé comprenant les étapes consistant :
à soumettre la matière végétale réduite en particules fines à une extraction alcaline à une température comprise dans l'intervalle de 15 °C à 50 °C pour produire un extrait à base de pectine ;
à séparer l'extrait de la matière végétale ; et
à neutraliser l'extrait pour produire l'agent gélifiant à base de pectine.
